Europäisches Patentamt

(19) European Patent Office

Office européen des brevets

(11) Numéro de publication: **0 202 156**

**A1**

(12) **DEMANDE DE BREVET EUROPEEN**

(21) Numéro de dépôt: 86400955.0

(22) Date de dépôt: 30.04.86

(51) Int. Cl.⁴: **F 16 K 1/226**
**F 16 K 1/228**

(30) Priorité: 10.05.85 FR 8507134

(43) Date de publication de la demande:
20.11.86 Bulletin 86/47

(84) Etats contractants désignés:
AT BE CH DE GB IT LI LU NL SE

(71) Demandeur: Munzing S.A.
11bis, rue D'Aguesseau
F-75008 Paris(FR)

(72) Inventeur: Briollais, Bernard
9 Pente de la Ravinière
F-95520 Osny(FR)

(74) Mandataire: Beauchamps, Georges et al,
Cabinet Z.Weinstein 20, avenue de Friedland
F-75008 Paris(FR)

(54) Dispositif annulaire d'étanchéité, notamment pour des vannes et robinets.

(57) Un dispostiff annulaire d'étanchéité, notamment pour des vannes et robinets, du type comprenant au moins deux structures de joint et une bague annulaire rigide disposée entre lesdites structures de joint, vieut se monter dans un logement annulaire dont le fond est conformé pour recevoir la première structure de joint, la bague étant radialement serrée sur la deuxième structure de joint.

La première structure de joint est conformée de façon à présenter une section transversale élastiquement déformable et la bague (2) est montée concentriquement à la première structure de joint (1) en déformant élastiquement la section transversale de celle-ci sur toute sa périphérie, de façon à assurer, sous l'effet de la déformation élastique, un autocentrage (4) lors de l'obturation, et une étanchéité entre ladite bague (2) et la première structure de joint (1).

L'invention trouve notamment application pour des vannes, en particulier du type papillon et des robinets.

FIG.2

EP 0 202 156 A1

## "Dispositif annulaire d'étanchéité, notamment pour des vannes et robinets"

La présente invention concerne généralement un dispositif annulaire d'étanchéité entre un organe mobile et une structure fixe, notamment pour des vannes et robinets comportant un corps percé d'un conduit axial et un organe obturateur mobile. L'invention trouve notamment application pour des vannes du type papillon, ou des clapets et robinets, dans lesquels l'organe d'obturation comprend une bordure périphérique venant porter, en fin de course d'obturation, sur la surface, notamment conoïde d'un siège, en particulier aux termes d'un déplacement tangent ou parallèle à l'axe principal de symétrie dudit siège.

On connaît déjà, notamment par le brevet français n° 2 398 940, un dispositif annulaire d'étanchéité destiné à venir au contact d'une portée d'étanchéité, avec autocentrage sur celle-ci, et comprenant un double joint torique comportant deux structures de joint respectivement interne et externe, et une bague annulaire rigide disposée entre les deux structures de joint précitées. Cet ensemble vient se monter dans un logement annulaire s'étendant radialement, et dont le fond est conformé pour recevoir de façon serrée la première structure de joint respectivement externe et assurer ainsi l'étanchéité avec le fond du logement. Par ailleurs, la bague est montée radialement serrée sur la deuxième structure de joint respectivement interne qui assure, en position d'obturation,

l'étanchéité entre l'organe obturateur et la bague, et plus généralement l'étanchéité avec la portée d'étanchéité qui lui est associée.

De plus, les deux structures de joint comportent chacune une enveloppe d'étanchéité, lesdites enveloppes étant reliées entre elles par une membrane d'étanchéité, l'ensemble constitué par les enveloppes et la membrane étant réalisé en une seule pièce torique de section de révolution présentant l'allure générale d'un C et dont l'âme présente une pliure en forme de V.

Une telle disposition présente cependant de graves inconvénients. En effet, un tel joint double torique s'avère trop rigide en déplacement radial, et il en résulte un risque de déformation inégale de la partie torique radialement interne d'où un risque de pression périphérique irrégulière. Dans une telle structure, la pliure en V constitue en effet, pratiquement un organe de rigidité de l'ensemble torique.

En outre, pour un tel double joint connu, les deux parties toriques sont obligatoirement en la même matière, donc de mêmes caractéristiques ou propriétés pour les deux parties et le joint constitue un produit spécial.

Enfin, pour un tel dispositif d'étanchéité, il n'est pas possible de contrôler la pression s'exerçant sur la partie torique interne, puisque cette pression s'applique essentiellement sur l'organe en V dont la souplesse est très limitée, et la déformation non controlable.

L'invention a donc pour but de supprimer les inconvénients précités et de fournir un dispositif annulaire d'étanchéité de structure simple et plus facilement disponible commercialement.

Pour résoudre le problème technique précité, la présente invention consiste, en un dispositif annulaire d'étanchéité du type précité caractérisé en ce que la première structure de joint est conformée de façon à présenter une section transversale élastiquement déformable et en ce que la bague annulaire rigide est montée concentriquement à la première structure de joint en déformant élastiquement la section transversale de celle-ci, sur toute sa périphérie, de façon à assurer, sous l'effet de la déformation élastique, l'autocentrage lors de l'obturation, et une étanchéité entre ladite bague et ladite deuxième structure de joint.

On obtient ainsi un dispositif permettant d'assurer une compression uniforme de la deuxième structure de joint, sur toute sa périphérie, tout en contrôlant et limitant son écrasement, notamment dans le cas d'un joint torique métallique par l'action de la déformation de la première structure de joint, le dispositif étant conformé de façon que les forces de compression radiale s'exerçant sur la structure de joint externe soient à tout moment inférieures aux forces de compression radiale s'exerçant sur la structure de joint interne.

L'invention sera mieux comprise et d'autres buts, caractéristiques et avantages de celle-ci apparaîtront plus clairement à la lumière de la description explicative qui va suivre, faite en référence aux dessins schématiques annexés donnés uniquement à titre d'exemples non limitatifs illustrant plusieurs modes de réalisation actuellement préférés de l'invention, et dans lesquels :

La figure 1 est une vue en coupe transversale d'une vanne du type papillon, dans le corps de laquelle est monté le dispositif annulaire d'étanchéité selon un premier mode de réalisation de l'invention ;

La figure 2 est une vue partielle en demi-coupe transversale montrant un premier mode de réalisation du dispositif d'étanchéité selon l'invention ;

La figure 3 est une vue partielle en demi- coupe transversale, semblable à la figure 2, d'une variante de réalisation du premier mode de réalisation de l'invention;

La figure 4 est une vue partielle en demi- coupe transversale d'un second mode de réalisation du dispositif d'étanchéité selon l'invention ;

La figure 5 est une vue semblable à la figure 2 d'un troisième mode de réalisation du dispositif d'étanchéité selon l'invention ;

La figure 6 est une vue partielle en coupe, semblable à la figure 2, d'un quatrième mode de réalisation du dispositif d'étanchéité selon l'invention ; et

La figure 7 est une vue en coupe suivant la ligne VII-VII du dispositif de la figure 1 ;

La figure 8 est une vue en coupe, semblable à la figure 7 comportant une variante d'exécution caractérisée par le fait que le dispositif annulaire d'étanchéité selon l'invention est porté par l'organe d'obturation ; et

La figure 9 est une vue semblable à la figure 2, d'un cinquième mode de réalisation du dispositif d'étanchéité selon l'invention.

La description qui va suivre sera faite, par souci de simplicité, en référence à une vanne du type papillon, mais le dispositif d'étanchéité selon l'invention n'est nullement limitée à cette application spécifique et permet d'une façon générale d'assurer l'étanchéité entre un organe mobile et une structure fixe.

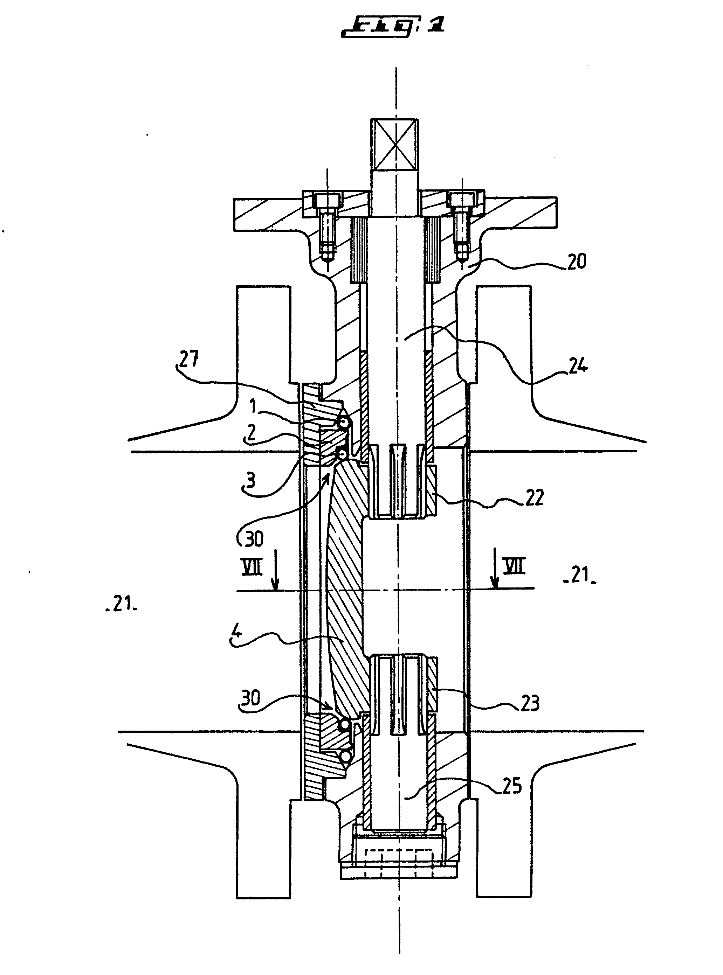

Dans l'exemple représenté à la figure 1, la vanne papillon comprend un corps 20 traversé par un conduit de section sensiblement circulaire 21 pour le passage d'un fluide, dont le sens de circulation peut être quelconque. Dans le conduit axial 21 est monté de façon mobile un organe obturateur ou papillon 4 portant deux oreilles diamétralement opposées 22, 23. L'une de ces oreilles 22 est liée en rotation à un arbre de commande 24 débouchant à l'extérieur du corps de vanne 20, tandis qu'un arbre mené 25 formant pivot, monté en rotation dans le corps 20 est engagé dans l'oreille opposée 23. L'obturateur 4 présente sur son pourtour une zone sensiblement sphérique annulaire destinée, en position de fermeture de la vanne, à coopérer avec un dispositif annulaire d'étanchéité 30 maintenu dans le corps de vanne 20 par l'intermédiaire d'un organe formant bride 27.

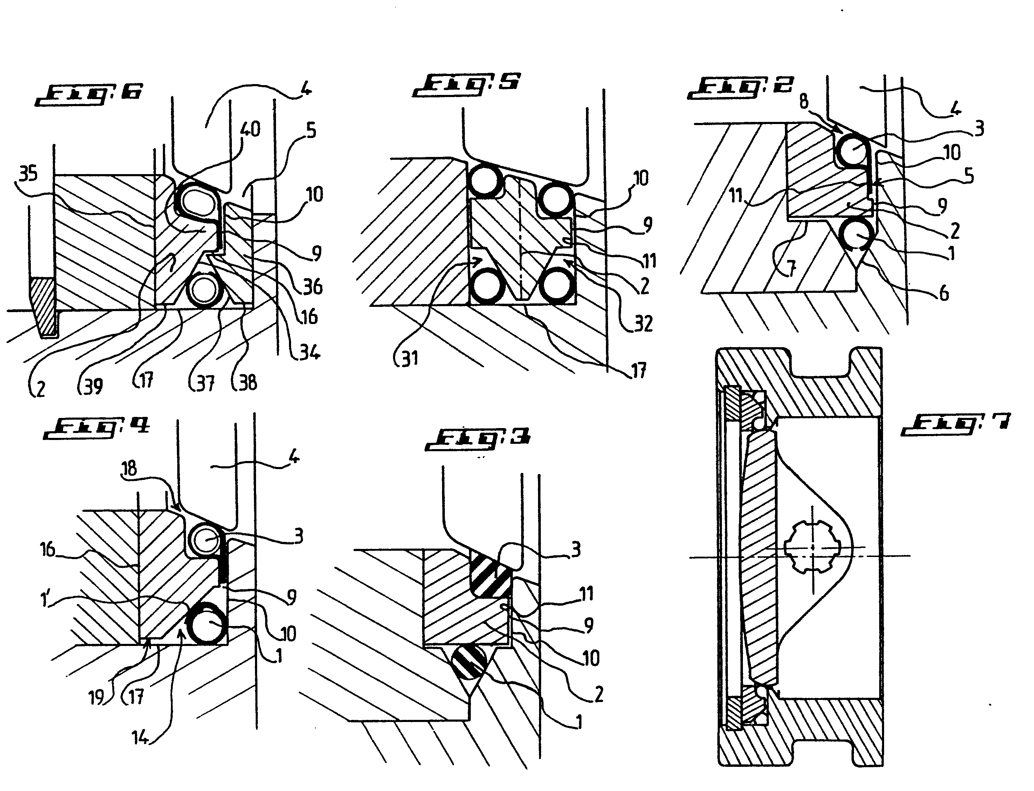

En référence aux figures 2 à 6 des dessins, un dispositif annulaire d'étanchéité, selon l'invention comprend au moins deux structures de joint torique respectivement interne 3 et externe 1 et une bague annulaire rigide disposée entre les structures de joint 1 et 3.

Ce dispositif vient se monter dans un logement annulaire s'étendant radialement et formé entre la bride 27 et le corps de vanne 20. Le fond de ce logement 5 est conformé pour recevoir de façon serrée la structure de joint externe 1, asssurant ainsi l'étanchéité vers l'extérieur. La bague 2 est montée radialement serrée sur la structure de joint interne 3 sur laquelle la portée du papillon 4 vient en contact au moment de la fermeture, assurant ainsi l'étanchéité par écrasement élastique. Une étanchéité "dynamique" est ainsi réalisée entre l'organe obturateur 4 et la bague 2.

La structure de joint externe 1 est conformée de façon à présenter une section transversale élastiquement déformable, et la bague 2 est montée concentriquement sensiblement intérieurement à cette structure de joint externe en déformant élastiquement la section transversale de celle-ci sur toute sa périphérie. On assure ainsi, sous l'effet de la déformation élastique, un autocentrage lors de l'obturation, ainsi qu'une étanchéité entre la bague 2 et la structure de joint externe 1.

On comprendra que la structure de joint externe joue de plus un rôle de "ressort" qui d'une part assure une compensation des excentrations de la bague 2 au moment de la fermeture du papillon, et permet d'autre part un retour en position initiale lors de l'ouverture de l'organe obturateur 4.

Dans un tel dispositif la bague rigide 2 a pour but d'assurer une compression uniforme de la structure de joint interne 3, sur toute sa périphérie et de limiter son écrasement, notamment dans le cas d'un joint torique métallique. En d'autres termes, les déformations dues à l'écrasement restent ainsi dans la plage de déformation élastique du joint.

Dans chaque mode de réalisation, la bague rigide 2 peut se déplacer radialement dans le logement 5 et permet ainsi de compenser les défauts de positionnement de l'organe obturateur 4 au moment de sa fermeture. Ce déplacement peut être effectué grâce à un jeu fonctionnel axial qui sera décrit en détail par la suite.

De même, on cherchera à limiter l'écrasement de la structure de joint externe 1 de manière à conserver dans tous les cas la fonction d'étanchéité vers l'extérieur, et également afin de contrôler l'écrasement de la structure de joint interne 3. On notera également que la bague annulaire 2 assure le positionnement longitudinal de la structure de joint interne.

D'une façon générale, les structures de joint selon l'invention font appel à des anneaux notamment toriques, en particulier métalliques, de section ouverte ou fermée, creuse ou pleine, avec ou sans ressort, préssurisé ou non, circulaire ou de toute forme appropriée.

Par ailleurs, selon les conditions d'utilisation (température, pression, nature du ou des fluides transportés, sécurité,...) les matériaux des différents constituants des éléments annulaires 1, 2, 3 peuvent être variés pour satisfaire aux diverses exigences. En ce qui concerne plus particulièrement les structures de joint, la nature de ces matériaux pourra être notamment métallique, plastique ou métalloplastique. Les critères de choix (caractéristiques mécaniques, forme et dimension) des structures de joint 1 et 3 seront déterminés de manière à répondre aux exigences décrites précédemment.

En outre, selon la disposition spécifique de l'organe obturateur, l'ensemble constitué des deux structures de joint et de la bague annulaire rigide pourra être perpendiculaire, inclinée, désaxée par rapport à l'axe de la tuyauterie, et de forme quelconque notamment circulaire, elliptique, oblongue ou autre.

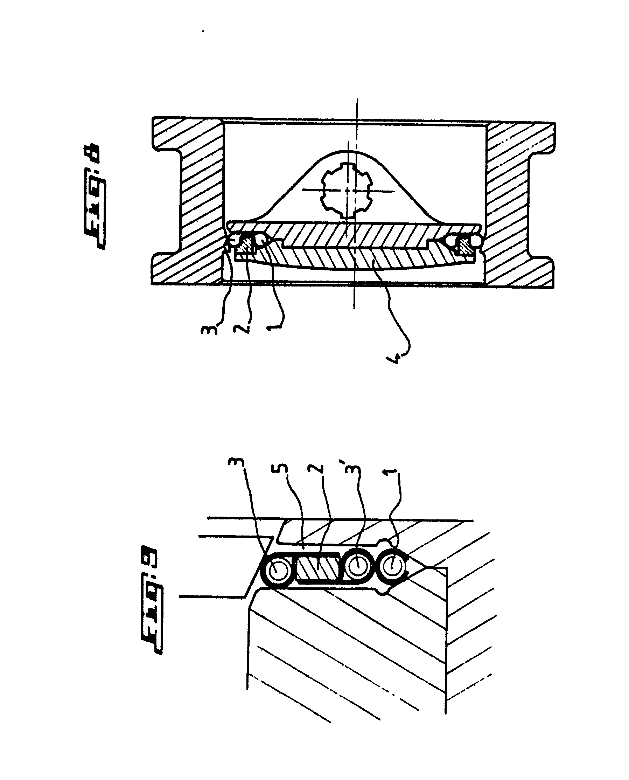

Selon une caractéristique particulière de l'invention, le logement 5 présente une section droite de forme sensiblement rectangulaire dont la largeur est sensiblement égale à la largeur de la bague 2. Le fond du logement 5 comporte de plus une gorge annulaire 6 à section transversale sensiblement en forme de V s'étendant radialement extérieurement audit fond et destinée à recevoir de façon radialement pressée la structure externe 1 comme le montrent les figures 2 et 3 des dessins. La portion plane 7 dudit fond forme une butée pour la bague 2, destinée à limiter son déplacement extérieurement radial lors de l'autocentrage. En d'autres termes, il existe, en position d'ouverture du papillon 4, un jeu radial entre la paroi radialement externe de la bague 2 et la partie plane 7 du fond du logement 5.

Avantageusement la bague annulaire rigide 2 est à section transversale sensiblement rectangulaire et présente une gorge 8 radialement interne destinée à loger la structure de joint interne 3 sensiblement en une position d'alignement radial avec la structure de joint externe 1.

Comme le montrent les figures 2 et 3, la gorge 8 est réalisée sur un bord latéral de la bague 2 et l'on prévoit de plus un jeu axial 9 entre la paroi latérale 11 de la bague et la paroi latérale voisine 10 du logement 5. Dans ces exemples, les deux structures de joint externe peuvent être identiques, et formées notamment d'anneaux métalliques circulaires de section ouverte avec ressort, (figure 2) ou différentes et formées notamment d'anneaux élastomériques ou métalloplastiques en particulier à section transversale circulaire (figure 3). La structure de joint interne 3 peut être également sensiblement de même nature (figure 2) ou bien réalisée en un matériau élastomérique ou métalloplastique conformé de façon à remplir totalement la gorge 8, et de préférence l'espace axial en regard de celle-ci, comme le montre la figure 3. Cette disposition est avantageuse puisqu'elle associe à une grande souplesse du joint interne, une étanchéité accrue entre la paroi latérale 11 de la bague 2 et la paroi latérale voisine 10 du logement 5.

Selon une autre caractéristique particulière de l'invention, le logement annulaire 5 présente une section droite de forme sensiblement rectangulaire dont la largeur est sensiblement égale à la largeur de la bague 2 qui présente, en section transversale, au moins une paroi inclinée relativement au fond définissant avec celui-ci et une paroi latérale correspondante du logement un espace annulaire 14 à section transversale sensiblement triangulaire destiné à loger de façon pressée la structure de joint externe 1.

Dans le mode de réalisation représenté à la figure 4 des dessins, la bague 2 présente une gorge radialement interne 18 destinée à loger la structure de joint interne 3 sensiblement dans une position d'alignement radial avec la structure de joint externe 1. La bague 2 présente de plus une paroi radialement externe 19 s'étendant, en section transversale sensiblement parallèlement au fond 17 du logement, sur une partie de la longueur de celui-ci. On comprendra que le fond du logement sert de butée à la paroi 19 afin de limiter le déplacement extérieurement radial de la bague 2 lors du centrage de l'organe obturateur. Dans ce mode de réalisation particulier, on utilise une seule structure de joint interne 3, et une seule structure de joint externe 1, la dimension axiale de ces structures de joint étant sensiblement du même ordre de grandeur que la dimension axiale de l'organe obturateur 4. De plus, la structure de joint externe est faite d'un anneau torique circulaire et dont l'enveloppe comporte une portion de recouvrement 1' venant en appui sur la surface inclinée précitée de la bague. Cette surface est inclinée relativement au fond d'un angle égal à environ 45° et la paroi latérale 16 de la bague, la plus éloignée des structures de joint est sensiblement plane et vient en appui latéral stable contre la paroi latérale voisine du logement. On obtient à l'aide de ce dispositif l'ensemble des effets de centrage et d'étanchéité précédemment décrits.

La figure 5 représente un autre mode de réalisation de l'invention adapté pour accroître l'étanchéité en créant une double barrière d'étanchéité, trouvant notamment application dans le cas de vannes de grand diamètre.

Dans ce cas, le dispositif comporte deux structures de joint interne, de préférence identiques, logées respectivement dans deux gorges radialement internes et réalisées sur chaque bord latéral de la bague 2, et deux structures de joint externe, de préférence identiques auxdites structures de joint interne, axialement séparées par la bague qui présente deux surfaces de contact avec lesdites structures de joint interne inclinées, et configurées, en section transversale, sensiblement en forme de V évasé radialement vers l'intérieur et formant avec le fond du logement 17 et chaque paroi latérale de celui-ci, deux espaces annulaires 31, 32 présentant une section transversale sensiblement triangulaire rectangle logeant respectivement de façon serrée chacune desdites structures de joint interne.

Un tel dispositif assure bien entendu une étanchéité accrue. Cette étanchéité accrue peut être également obtenue d'une façon générale par juxtaposition de plusieurs dispositifs d'étanchéité, tel que en particulier le dispositif de la figure 4. A cet égard, la bague 2 (figure 5) peut être réalisée en deux éléments juxtaposés comme figuré par le trait mixte. Dans un tel cas, le premier dispositif d'étanchéité assure une étanchéité préliminaire et un précentrage de l'organe obturateur. L'étanchéité et l'autocentrage
définitifs étant obtenus grâce aux deux dispositifs
d'étanchéité.


La figure 6 des dessins montre encore un autre mode de
réalisation avantageux de l'invention. Dans ce cas, le
logement 5 présente également une section droite de
forme sensiblement rectangulaire et la bague 2 présente
en section transversale une paroi inclinée 34
relativement au fond 17 du logement 5, et une paroi
radialement externe 39 s'étendant, en section
transversale depuis le point radialement le plus
externe de la paroi inclinée 34, sensiblement
parallèlement au fond 17 jusqu'à une paroi latérale 35
du logement 5. La paroi latérale de la bague 2, voisine
de cette paroi 35 est sensiblement plane et vient en
appui latéral contre la paroi latérale 35 du logement.
Par ailleurs, le logement 5 comporte une pièce
annulaire 36 présentant une paroi conique 37 destinée à
coopérer avec la paroi conique 34 de la bague 2 pour
former un logement sensiblement biconique évasé
radialement vers l'extérieur et destiné à recevoir de
façon serrée la structure de joint externe 1. La pièce
annulaire 36 présente également une paroi radialement
externe 38 s'étendant, en section transversale depuis
le point radialement le plus externe de la paroi
inclinée 37, sensiblement parallèlement au fond 17 du
logement jusqu'à la paroi latérale du logement 5,
opposée à la paroi 35.


La bague 2 présente de plus une partie 40 faisant
axialement saillie et s'étendant en section
transversale depuis le point radialement le plus interne de la paroi inclinée 34, et coopérant avec une partie complémentaire de la pièce annulaire 36, conformée pour laisser subsister, entre la bague 2 et la pièce annulaire 36 un jeu axial 9 ainsi qu'un jeu radial 16. On comprendra que lorsque la structure de joint interne 3 est comprimée par l'organe obturateur 4 radialement vers l'extérieur, il y a déplacement concomitant de la bague 2 qui vient presser la structure de joint externe 1. La structure de joint externe 1 transmet à la pièce annulaire 36 une force tendant à déplacer cette dernière radialement vers l'intérieur réduisant ainsi le jeu radial 16 existant entre la bague 2 et la pièce annulaire.

La figure 9 des dessins représente un dernier mode de réalisation de l'invention caractérisé en ce que entre la bague 2 et la structure de joint externe 1 est disposée une troisième structure de joint 3' , de préférence de même nature que la structure de joint interne 3. Cette structure de joint 3' est montée radialement serrée sur la bague 2 et sur la structure de joint externe 1. Dans ce cas, le logement 5 présente sur toute la largeur de son fond une gorge ayant en coupe transversale sensiblement la forme d'un V. On comprendra qu'un tel dispositif permet un déplacement radial de la bague rigide 2, sensiblement plus important que les déplacements qui peuvent être obtenus à l'aide des dispositifs précités. Par ailleurs, il n'y a pas lieu, pour un tel dispositif de prévoir un organe formant butée pour limiter le déplacement radial de la bague.

D'une façon générale, les différents dispositifs qui viennent d'être décrits permettent de contrôler le déplacement de la bague rigide 2 tout en assurant une étanchéité constante sur toute la périphérie de la structure de joint interne 3. En effet, celle-ci est comprimée de façon constante sur sa périphérie. De plus, un tel dispositif assure le fait que la compression s'exerçant sur la structure de joint externe 1 est plus souple que celle s'exerçant sur la structure de joint interne 3.

On comprendra que la structure de joint externe 1 est montée dans un état de compression prédéterminé sur la bague rigide 2, de façon que quel que soit le déplacement radial de la bague 2, celle-ci reste toujours en contact étanche avec la structure de joint externe 1.

La figure 8 des dessins représente une variante d'exécution de l'invention, caractérisée par le fait que le dispositif annulaire d'étanchéité est porté dans un logement formé directement dans l'organe d'obturation 4. Ainsi, les différents dispositifs précédemment décrits peuvent être portés par le papillon 4. Dans ce cas, la position relative des différentes structures de joint est inversée, ainsi, la structure de joint 1 devient une structure de joint interne, tandis que la structure de joint 3 devient une structure de joint externe. Néanmoins, chaque élément conserve une fonction identique à celle précédemment définie.

Revendications

1.- Dispositif annulaire d'étanchéité destiné à venir au contact d'une portée d'étanchéité, avec autocentrage sur celle-ci, notamment pour des vannes et robinets comportant un corps percé d'un conduit axial et un organe d'obturation mobile, du type comportant au moins deux structures de joint annulaire ou anneaux d'étanchéité et une bague annulaire rigide disposée entre lesdites structures de joint, cet ensemble venant se monter dans un logement annulaire s'étendant radialement et dont le fond est conformé pour recevoir de façon serrée ladite première structure de joint et assurer ainsi l'étanchéité avec le fond du logement, ladite bague étant montée radialement serrée sur ladite seconde structure de joint qui assure, en position d'obturation, l'étanchéité avec ladite portée d'étanchéité qui lui est associée, caractérisé en ce que ladite première structure de joint (1) est conformée de façon à présenter une section transversale élastiquement déformable et en ce que ladite bague (2) est montée concentriquement à ladite première structure de joint (1) en déformant élastiquement la section transversale de celle-ci, sur toute sa périphérie, de façon à assurer, sous l'effet de la déformation élastique, l'autocentrage lors de l'obturation, et une étanchéité entre ladite bague (2) et ladite première structure de joint (1).

2.- Dispositif selon la revendication 1, caractérisé en ce que le logement (5) précité présente une section droite de forme sensiblement rectangulaire dont la largeur est sensiblement égale à la largeur de la bague (2) précitée, le fond dudit logement (5) comprenant une gorge annulaire à section transversale sensiblement en forme de V s'étendant radialement extérieurement audit fond et destinée à recevoir de façon radialement pressée la première structure de joint respectivement externe (1) précitée, la portion plane (7) dudit fond formant une butée destinée à limiter le déplacement extérieurement radial de ladite bague (2) lors de l'autocentrage précité.

3.- Dispositif selon la revendication 2, caractérisé en ce que la bague annulaire (2) précitée est à section transversale sensiblement rectangulaire et présente au moins une gorge (8) radialement interne destinée à loger la deuxième structure de joint respectivement interne (3) précitée, sensiblement en une position d'alignement radial avec la structure de joint externe (1) précitée.

4.- Dispositif selon la revendication 2 ou 3, caractérisé en ce que la gorge (8) précitée est réalisée sur un bord latéral de la bague (2) et en ce que l'on prévoit un jeu axial (9) entre la paroi latérale (11) dudit bord latéral de la bague et la paroi latérale voisine (10) du logement (5) précité.

5.- Dispositif selon la revendication 4, caractérisé en ce que la structure de joint interne (3) précitée est réalisée en un matériau élastomérique ou métalloplastique et est conformée de façon à remplir totalement la gorge précitée et de préférence l'espace axial précité en regard de celle-ci, assurant ainsi l'étanchéité entre la paroi latérale (11) précitée de la bague (2) et la paroi latérale voisine (10) du logement (5) précité.

6.- Dispositif selon la revendication 1, caractérisé en ce que le logement annulaire (5) précité présente une section droite de forme sensiblement rectangulaire dont la largeur est sensiblement égale à la largeur de la bague (2) précitée, et en ce que la bague (2) précitée est conformée pour laisser subsister un jeu axial (9) entre au moins l'une de ses parois latérales et la paroi latérale voisine dudit logement, et présente, en section transversale, au moins une paroi inclinée, relativement audit fond définissant avec celui-ci et une paroi latérale dudit logement un espace annulaire (14) à section transversale sensiblement triangulaire destiné à loger de façon pressée la première structure de joint respectivement externe (1) précitée.

7.- Dispositif selon la revendication 6, caractérisé en ce que la bague (2) précitée présente au moins une gorge radialement interne, destinée à loger la seconde structure de joint, respectivement interne (3) précitée sensiblement en une position d'alignement radial avec la structure de joint externe (1) précitée, et une paroi radialement externe s'étendant, en section transversale, sensiblement parallèlement au fond dudit logement, sur une partie de sa longueur et coopérant avec celui-ci afin de limiter le déplacement extérieurement radial de ladite bague (2) lors de l'autocentrage précité.

8.- Dispositif selon la revendication 7, caractérisé en ce que l'on utilise une structure de joint interne et une structure de joint externe unique, et en ce que la paroi latérale (16) de la bague, axialement la plus éloignée desdites structures de joint est sensiblement plane pour venir en appui latéral stable contre la paroi latérale voisine du logement (5).

9.- Dispositif selon la revendication 7, caractérisé en ce qu'il comporte deux structures de joint interne (1), de préférence identiques, logées respectivement dans deux gorges radialement internes réalisées sur chaque bord latéral de la bague (2), et deux structures de joint externe, de préférence identiques auxdites structures de joint interne, axialement séparées par ladite bague (2) qui présente deux surfaces de contact inclinées, configurées, en section transversale, sensiblement en forme de V évasé radialement vers l'intérieur, et formant avec le fond précité du logement et chaque paroi latérale, deux espaces annulaires à section sensiblement triangulaire rectangle logeant de façon serrée chacune desdites structures de joint (1).

10.- Dispositif selon la revendication 1, caractérisé en ce que le logement annulaire (5) précité présente une section droite de forme sensiblement rectangulaire, en ce que la bague (2) précitée présente, en section transversale une paroi inclinée (34) relativement audit fond (17) du logement (5) et une paroi (35) radialement externe s'étendant, en section transversale depuis le point radialement le plus externe de ladite paroi inclinée (34), sensiblement parallèlement audit fond (17) jusqu'à une paroi latérale (35) dudit logement (5), et en ce que ledit logement (5) comporte une pièce annulaire (36) présentant une paroi conique (37) destinée à coopérer avec ladite paroi (34) de la bague pour former un logement sensiblement biconique évasé radialement vers l'extérieur et destiné à recevoir de façon serrée ladite première structure de joint respectivement externe (1), ladite bague (2) présentant de plus une partie faisant axialement saillie (40) et s'étendant en section transversale depuis le point radialement le plus interne de ladite paroi inclinée (34), et coopérant avec une partie complémentaire de ladite pièce annulaire (36) conformée pour laisser subsister, entre ladite bague (2) et ladite pièce annulaire (36) un jeu axial (9) ainsi qu'un jeu radial (16).

**Fig. 1**

0202156

Fig.8

Fig.9

Office européen
des brevets

**RAPPORT DE RECHERCHE EUROPEENNE**

**0202156**
Numero de la demande

EP    86 40 0955

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | EP-A-0 054 473  (REALMECA) <br> * Page 12, ligne 7 - page 13, ligne 3 * <br><br> --- | 1 | F 16 K    1/226 <br> F 16 K    1/228 |
| A | EP-A-0 058 096  (A.M.R.I.) <br><br> --- |  |  |
| A | FR-A-2 300 944  (FISHER CONTROLS CO.) <br><br> --- |  |  |
| A | US-A-4 088 299  (V.K. MACIULAITIS) <br><br> ----- |  |  |

DOMAINES TECHNIQUES
RECHERCHES (Int Cl.4)

F 16 K    1/00

Le present rapport de recherche a été établi pour toutes les revendications

| Lieu de la recherche <br> LA HAYE | Date d'achèvement de la recherche <br> 14-08-1986 | Examinateur <br> DE SMET F.P. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82